# FASCICULE DE BREVET EUROPEEN

(11) **EP 1 375 222 B1**
(45) Date de publication et mention de la délivrance du brevet: **10.11.2010**
(21) Numéro de dépôt: 03291567.0
(22) Date de dépôt: 25.06.2003
(51) Int. Cl.: B60J 3/02

(54) **Véhicule avec un ensemble pare-soleil coulissant**
Fahrzeug mit einer verschiebbaren Sonnenblendeeinrichtung
Vehicle with a slidable sun visor unit

(30) Priorité: 28.06.2002 FR 0208085
(43) Date de publication de la demande: 02.01.2004
(73) Titulaire: Peugeot Citroën Automobiles, 78140 Velizy-Villacoublay (FR)
(72) Inventeur: Jeangeorges, Fabrice, 92220 Bagneux (FR)
(74) Mandataire: Timoney, Ian Charles Craig

(56) Documents cités:
- DE-A- 4 323 502
- US-A- 5 031 952

## Description

La présente invention se rapporte à un véhicule avec un ensemble pare-soleil coulissant, et, plus particulièrement avec un ensemble pare-soleil qui est destiné à être monté à l'intérieur d'un véhicule automobile.

De manière conventionnelle, un véhicule automobile est muni de pare-soleil qui sont installés sur la traverse avant du pavillon du véhicule. Cette traverse délimite le bord supérieur du pare brise du véhicule. Typiquement, chaque pare-soleil est rabattable autour d'un axe d'articulation entre une position fermée dans laquelle il s'étend sensiblement parallèle à la surface inférieure du pavillon, et une position déployée dans laquelle il se trouve près du pare brise du véhicule, adjacent à son bord supérieur.

Le document DE-A-4 323 502 divulgue un véhicule avec un pare-soleil selon le préambule de la revendication 1.

Les véhicules de construction récente sont souvent équipés d'un pare brise qui s'étend d'avantage vers l'arrière du véhicule par rapport aux véhicules antérieurs. Dans ce type de véhicule, la traverse avant du pavillon se trouve au dessus de la tête du conducteur, ou même derrière celle-ci. Un pare-soleil de construction classique, monté sur la traverse avant d'un tel véhicule n'offre pas une occultation adéquate au conducteur puisqu'il se trouve, en position déployée, à l'arrière du point d'oeil de celui-ci.

La demanderesse s'est fixé comme objectif de fournir un ensemble pare-soleil qui est fiable et de construction simple et qui assure un angle d'occultation correct pour le conducteur du véhicule.

La présente invention a trait à un véhicule avec un ensemble pare-soleil coulissant, monté sur le pavillon du véhicule, et comprenant au moins un élément occulteur qui est mobile entre une première position et une position déployée caractérisé en ce qu'il comprend de plus un support coulissant sur lequel est monté l'élément occulteur, le support coulissant étant muni d'un pare-soleil extensible s'étendant entre le support coulissant et le pavillon du véhicule, le support coulissant étant déplaçable entre une position avoisinant un bord arrière du pare brise du véhicule et une position avancée dans laquelle, lorsqu'il est déployé, l'élément occulteur est susceptible d'occulter le point d'oeil du conducteur du véhicule.

Ce type d'ensemble permet, lorsqu'il se trouve en position déployée, d'assurer une occultation optimale pour le conducteur.

De préférence, le pare-soleil extensible comprend un rideau flexible, le support coulissant comportant un axe sur lequel peut s'enrouler le rideau flexible.

Avantageusement, le support coulissant est monté sur des rails dont un est disposé sur chaque bord latéral du pare brise.

De préférence, l'ensemble comprend deux éléments occulteur disposés de part et d'autre du support coulissant, chaque élément étant monté sur le support coulissant au moyen d'une articulation.

D'autres caractéristiques et avantages de la présente invention vont maintenant être décrits de manière plus détaillée à l'aide des dessins annexés donnés à titre illustratif et non limitatif sur lesquels :-
- la Figure 1 est une vue schématique d'un ensemble pare-soleil coulissant, selon l'invention ; dans une position reculée, et
- la Figure 2 est une vue analogue à celle de la figure 1, l'ensemble se trouvant dans une position avancée.

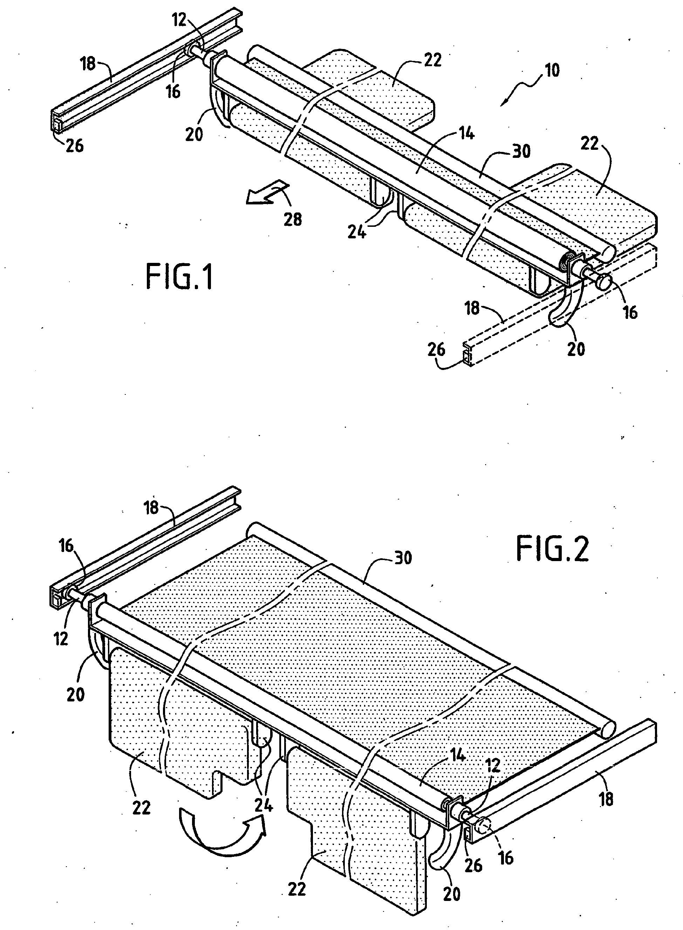

Sur la Figure 1, un ensemble pare-soleil coulissant, représenté généralement en 10, comprend un axe 12 sur lequel est enroulé un occulteur extensible 14, de préférence flexible qui, dans l'exemple illustré, est un rideau tissé. L'occulteur extensible 14, qui forme ainsi un pare-soleil extensible, a une forme généralement rectangulaire, un bord étant attaché à l'axe 12, le bord opposé étant attaché à la surface interne du pavillon du véhicule sur lequel l'ensemble est monté (non-représentés).

Les extrémités de l'axe 12 comportent chacune un galet de guidage 16, formé en matériau plastique ou en acier, qui est reçu dans un rail de guidage associé 18 disposé sur un arc de pavillon associé (non-représenté) sensiblement parallèle au plan du pavillon. Un carter rigide 20 est monté entre les extrémités de l'axe 12 afin de s'étendre à l'extérieur de l'occulteur extensible 14 enroulé autour de l'axe 12. Sur le carter rigide 20 est monté au moins un pare soleil rabattable 22 formant l'élément occulteur, deux dans l'exemple illustré, au moyen d'une articulation 24 associée. Chaque pare soleil 22 est rabattable autour d'un axe d'articulation entre une position fermée dans laquelle il s'étend sensiblement parallèle à la surface inférieure du pavillon, et une position déployée, tel qu'il sera décrit ci-dessous.

Chaque rail de guidage 18 est muni d'une butée 26 qui est destinée à limiter le déplacement des galets 16.

La figure 1 illustre l'ensemble dans sa position de repos, position dans laquelle il se trouve adjacent au bord arrière du pare-brise (non représenté). Chaque pare-soleil 22 se trouve dans une position fermée dans laquelle il s'étend sensiblement parallèle à la surface inférieure du pavillon. L'occulteur extensible 14 est enroulé autour de l'axe 12.

Lorsque le conducteur souhaite utiliser l'ensemble pare-soleil, il tire sur le carter 20 au moyen d'une poignée pour faire avancer l'ensemble dans le sens de la flèche 28 vers la position illustrée sur la figure 2. Le bord arrière de l'occulteur extensible 14 étant attaché au pavillon au moyen d'une barre de fixation 30, l'occulteur se déroule au fur est à mesure que l'axe 12 avance. Dans sa position déroulée, l'occulteur flexible offre une première protection au soleil passant par la partie haute du pare brise. Si le conducteur souhaite obtenir une protection additionnelle il peut rabattre l'un ou l'autre de pare soleil 22 puis l'orienter au moyen de l'articulation 24.

L'occulteur extensible 14 peut être formé de tissu flexible ou d'un ou de plusieurs panneaux rigides. Dans leur position de repos, les panneaux rigides sont disposés dans des logements adaptés, formés dans le pavillon du véhicule. Les pare soleil 22 sont de construction classique.

L'ensemble peut avantageusement comprendre un moteur électrique destiné à faire avancer et reculer l'ensemble sur les rails de guidage.

De manière alternative, chaque pare soleil 22 peut être monté sur un ensemble coulissant associé, s'étendant entre un rail de guidage 18 et un rail de guidage central (non-représenté) disposé au milieu du pavillon du véhicule.

L'ensemble pare soleil selon l'invention offre une protection efficace contre le soleil pour tous types de véhicules munis de pare brise s'étendant d'avantage vers l'arrière du véhicule par rapport aux véhicules antérieurs.

## Revendications

1. Véhicule avec un ensemble pare-soleil coulissant (10) monté sur le pavillon du véhicule et comprenant au moins un élément occulteur (22) qui est mobile entre une première position et une position déployée, **caractérisé en ce qu'**il comprend de plus un support coulissant (12, 20) sur lequel est monté l'élément occulteur (22), le support coulissant (12, 20) étant muni d'un pare-soleil extensible (14) s'étendant entre le support coulissant (12,20) et le pavillon du véhicule, le support coulissant (12,20) étant déplaçable entre une position avoisinant un bord arrière du pare-brise du véhicule et une position avancée dans laquelle, lorsqu'il est déployé, l'élément occulteur est susceptible d'occulter le point d'oeil du conducteur du véhicule.

2. Véhicule avec un ensemble selon la revendication 1, **caractérisé en ce que** le pare-soleil extensible (14) comprend un rideau flexible (14), le support coulissant (12,20) comportant un axe (12) sur lequel peut s'enrouler le rideau flexible (14).

3. Véhicule avec un ensemble selon la revendication 1 ou 2, **caractérisé en ce que** le support (12, 20) est monté sur des rails (18) dont un est disposé sur chaque bord latéral du pare brise.

4. Véhicule avec un ensemble selon la revendication 3, **caractérisé en ce que** le support coulissant (12,20) s'étend à travers toute la largeur du pare brise.

5. Véhicule avec un ensemble selon la revendication 2 ou 3 et 4 quand ces dernières sont basées directement ou indirectement sur la revendication 2, **caractérisé en ce que** le support coulissant est formé par l'axe (12) sur lequel peut s'enrouler le rideau flexible (14).

6. Véhicule avec un ensemble selon l'une des revendications précédentes, **caractérisé en ce qu'**il comprend deux éléments occulteur (22) disposés de part et d'autre du support coulissant (12, 20), chaque élément étant monté sur le support coulissant (12,20) au moyen d'une articulation (24).

7. Véhicule avec un ensemble selon la revendication 1, **caractérisé en ce que** le pare-soleil extensible comprend un panneau rigide (14).

## Claims

1. Vehicle with a sliding sun visor assembly (10) mounted on the roof of the vehicle and comprising at least one shade element (22) which is movable between a first position and a deployed position, **characterized in that** it comprises in addition a sliding support (12, 20) on which the shade element (22) is mounted, the sliding support (12, 20) being provided with an extensible sun visor (14) extending between the sliding support (12, 20) and the roof of the vehicle, the sliding support (12, 20) being displaceable between a position neighbouring a rear edge of the windscreen of the vehicle and an advanced position in which, when it is deployed, the shade element is able to shade the eye level region of the driver of the vehicle.

2. Vehicle with an assembly according to Claim 1, **characterized in that** the extensible sun visor (14) comprises a flexible curtain (14), the sliding support (12, 20) comprising an axis (12) on which the flexible curtain (14) can be wound.

3. Vehicle with an assembly according to Claim 1 or 2, **characterized in that** the support (12, 20) is mounted on rails (18), one of which is arranged on each lateral edge of the windscreen.

4. Vehicle with an assembly according to Claim 3, **characterized in that** the sliding support (12, 20) extends over the entire width of the windscreen.

5. Vehicle with an assembly according to Claim 2 or 3 and 4 when these latter are based directly or indirectly on Claim 2, **characterized in that** the sliding support is formed by the axis (12) on which the flexible curtain (14) can be wound.

6. Vehicle with an assembly according to one of the preceding claims, **characterized in that** it comprises two shade elements (22) arranged on either side of the sliding support (12, 20), each element being mounted on the sliding support (12, 20) by means of an articulation (24).

7. Vehicle with an assembly according to Claim 1, **characterized in that** the extensible sun visor comprises a rigid panel (14).

## Patentansprüche

1. Fahrzeug mit einer gleitenden Sonnenblendeneinheit (10), die auf das Dach des Fahrzeugs montiert ist und mindestens ein Verdunkelungselement (22) aufweist, das zwischen einer ersten Position und einer aufgebreiteten Position beweglich ist, **dadurch gekennzeichnet, dass** sie ferner einen Gleitträger (12, 20) aufweist, auf den das Verdunkelungselement (22) montiert ist, wobei der Gleitträger (12, 20) mit einer spannbaren Sonnenblende (14) versehen ist, die sich zwischen dem Gleitträger (12, 20) und dem Dach des Fahrzeugs erstreckt, wobei der Gleitträger (12, 20) zwischen einer Position in der Nähe eines hinteren Rands der Windschutzscheibe des Fahrzeugs und einer vorgeschobenen Position beweglich ist, in der das Verdunkelungselement, wenn es aufgebreitet ist, den Blickpunkt des Fahrers des Fahrzeugs verdunkeln kann.

2. Fahrzeug mit einer Einheit nach Anspruch 1, **dadurch gekennzeichnet, dass** die spannbare Sonnenblende (14) einen biegsamen Vorhang (14) aufweist, wobei der Gleitträger (12, 20) eine Achse (12) aufweist, auf der sich der biegsame Vorhang (14) aufrollen kann.

3. Fahrzeug mit einer Einheit nach Anspruch 1 oder 2, **dadurch gekennzeichnet, dass** der Träger (12, 20) auf Schienen (18) montiert ist, von welchen eine auf jedem seitlichen Rand der Windschutzscheibe angeordnet ist.

4. Fahrzeug mit einer Einheit nach Anspruch 3, **dadurch gekennzeichnet, dass** sich der Gleitträger (12, 20) über die ganze Breite der Windschutzscheibe erstreckt.

5. Fahrzeug mit einer Einheit nach Anspruch 2 oder 3 und 4, wenn Letztere direkt oder indirekt auf dem Anspruch 2 beruhen, **dadurch gekennzeichnet, dass** der Gleitträger von der Achse (12) gebildet wird, auf der sich der biegsame Vorhang (14) aufrollen kann.

6. Fahrzeug mit einer Einheit nach einem der vorhergehenden Ansprüche, **dadurch gekennzeichnet, dass** sie zwei Verdunkelungselemente (22) aufweist, die jeweils auf einer Seite des Gleitträgers (12, 20) angeordnet sind, wobei jedes Element mit einer Anlenkung (24) auf den Gleitträger (12, 20) montiert ist.

7. Fahrzeug mit einer Einheit nach Anspruch 1, **dadurch gekennzeichnet, dass** der spannbare Sonnenschutz eine starre Tafel (14) aufweist.
